# EUROPÄISCHE PATENTSCHRIFT

(11) **EP 3 669 718 B1**
(45) Veröffentlichungstag und Bekanntmachung des Hinweises auf die Patenterteilung: **09.08.2023**
(21) Anmeldenummer: 19215999.4
(22) Anmeldetag: 13.12.2019
(51) Int. Cl.: A47J 31/46, A47J 31/44, A47J 31/56

(54) **WASSERTANKEINRICHTUNG UND GETRÄNKEAUTOMAT**
WATER TANK DEVICE AND BEVERAGE MACHINE
DISPOSITIF DE RÉSERVOIR D'EAU ET DISTRIBUTEUR AUTOMATIQUE DE BOISSONS

(30) Priorität: 21.12.2018 DE 102018222824
(43) Veröffentlichungstag der Anmeldung: 24.06.2020
(73) Patentinhaber: BSH Hausgeräte GmbH, 81739 München (DE)
(72) Erfinder: Winkler, Gerhard, 83334 Inzell (DE); Henz, Manuel, 83410 Laufen (DE); Reichel, Thomas, 83278 Traunstein (DE)

(56) Entgegenhaltungen:
- EP-A1- 3 153 078
- EP-A1- 3 305 142
- EP-A1- 3 412 183

## Beschreibung

Die vorliegende Erfindung betrifft eine Wassertankeinrichtung für einen Getränkeautomaten, insbesondere für einen Kaffeevollautomaten, gemäß dem Oberbegriff des Anspruchs 1. Die Erfindung betrifft außerdem einen Getränkeautomaten mit einer solchen Wassertankeinrichtung.

Aus der EP 3 305 142 A1 ist eine Wassertankeinrichtung bekannt, mit einer Sicherheitseinrichtung, die im vorliegenden Fall als Sensoreinrichtung ausgestaltet ist und einen Wasserfüllstand in dem Wassertank überwacht. Vergleichbares ist aus der EP 3 412 183 A1 und der EP 3 153 078 A1 bekannt.

Aus der EP 2 710 937 A1 ist ein modulares Hausgerätesystem bekannt, bestehend aus einem Hausgerät und einer mit diesem koppelbaren Verbindungseinheit, die über einen Anschluss an ein elektrisches Haushaltsnetz verfügt. Zusätzlich ist ein zweiter Anschluss an ein Haushaltswassernetz vorgesehen.

Aus der EP 2 702 908 A1 ist eine Getränkeautomat mit einem Wasserbehälter mit mindestens einem zum Füllen des Wasserbehälters mit einem Wasseranschluss ansteuerbar verbindbaren Wasserzulauf, einer Steuereinrichtung zum Ansteuern des ansteuerbar verbindbaren Wasserzulaufs und mit mindestens einem Füllstandsensor zum Erzeugen eines Signals, welches mindestens angibt, ob oder ob nicht ein erster Füllstand von Flüssigkeit innerhalb des Wasserbehälters erreicht oder überschritten ist. Um einen Reinigungsvorgang zu vereinfachen, ist vorgesehen, dass der zumindest eine Füllstandsensor zum Übermitteln des Signals mit der Steuereinrichtung verbindbar bzw. verbunden ist und dass die Steuereinrichtung dazu ausgelegt ist, den Wasserzulauf in Abhängigkeit von dem Signal des zumindest einen Füllstandsensors anzusteuern.

Generell ist es bekannt, Getränkeautomaten, insbesondere auch zunehmend Kaffeevollautomaten, mit einem Festwasseranschluss auszustatten. Um dabei beispielsweise eine Leckage im Bereich eines Wassertanks detektieren zu können, sind Sensoren, beispielsweise Reed-Sensoren oder kapazitive Sensoren vorgesehen, die einen jeweiligen Ist-Zustand im Wassertank erfassen und bei Überschreiten vordefinierter Grenzwerte ein entsprechendes Signal erzeugen. Die Verarbeitung des Signals und eine weitere Ansteuerung erfolgt dabei mittels einer speziellen Sicherheitssoftware. Nachteilig bei einer derartigen Sicherheitssoftware ist jedoch, dass diese nicht jeden Fehlerfall einwandfrei erkennen kann und dadurch fehleranfällig ist. Zudem ist zur Erfassung und Steuerung eines solchen Fehlerfalls immer eine solche Sicherheitssoftware erforderlich.

Die vorliegende Erfindung beschäftigt sich daher mit dem Problem, für eine Wassertankeinrichtung der gattungsgemäßen Art eine verbesserte oder zumindest alternative Ausführungsform anzugeben, die insbesondere zuverlässig ist und ohne zusätzliche Sicherheitssoftware auskommt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Wassertankeinrichtung einen einfachen Schwimmerschalter zur Unterbrechung einer Wasserzufuhr zu nutzen und dadurch eine Sicherheitseinrichtung für einen Getränkeautomaten zu schaffen, die zuverlässig arbeitet und zudem ohne zusätzliche Sicherheitssoftware auskommt. Die erfindungsgemäße Wassertankeinrichtung für einen Getränkeautomaten, insbesondere für einen Kaffeevollautomaten, besitzt dabei folgende Komponenten: Einen Auffangtank, in welchem ein Wassertank angeordnet ist, wobei der Wassertank über einen Einlauf und ein elektrisch betätigbares Aquastoppventil an einen Festwasseranschluss, beispielsweise einen Hauswasseranschluss, anschließbar ist. Der Wassertank besitzt einen Überlauf, der in den Auffangtank führt, wobei das Aquastoppventil in bestromtem Zustand geöffnet und in einem stromlosen Zustand geschlossen ist. Darüber hinaus besitzt die Wassertankeinrichtung üblicherweise ein Auslassventil, über welches Wasser aus dem Wassertank abgelassen werden kann, beispielsweise einer Brühkammer des Getränkeautomaten zugeführt werden kann. Im Auffangtank ist nun erfindungsgemäß ein Schwimmerschalter angeordnet, der derart ausgebildet ist, dass er ab einem vordefinierten Wasserstand im Auffangtank öffnet und dann eine Stromzufuhr zum Aquastoppventil unterbricht, woraufhin dieses schließt. Die erfindungsgemäße Wassertankeinrichtung kann somit absolut unabhängig von einer beispielsweise in bislang bekannten Getränkeautomaten eingesetzten Sicherheitssoftware arbeiten und ist darüber hinaus unabhängig von beispielsweise sogenannten Reed-Sensoren oder kapazitiven Sensoren.

Im Vergleich zu aus dem Stand der Technik bekannten Getränkeautomaten ist der erfindungsgemäß eingesetzte Schwimmerschalter konstruktiv auch äußerst einfach und dadurch robust.

Bei einer vorteilhaften Weiterbildung der erfindungsgemäßen Lösung ist der Einlauf in den Wassertank oberhalb des Überlaufs angeordnet, insbesondere um eine Fallstrecke S höher als der Überlauf. Durch die Fallstrecke S kann insbesondere in einem Fehlerfall und bei einem anstehenden Unterdruck ein Zurücksaugen von Wasser in einen Hauswasseranschluss vermieden werden.

Bei einer weiteren vorteilhaften Ausführungsform der erfindungsgemäßen Lösung ist zur Erfassung eines Wasserstandes in dem Wassertank ein Wasserstandsensor vorgesehen, der insbesondere als Reed-Sensor ausgebildet sein kann. Über einen derartigen Reed-Sensor lässt sich somit konstruktiv einfach und vergleichsweise kostengünstig und darüber hinaus äußerst genau ein Wasserstand im Wassertank erfassen, um beispielsweise eine Wasserzufuhr zu einer Brühkammer des Getränkeautomaten, insbesondere sofern dieser als Kaffeevollautomat ausgebildet ist, genau zu steuern. Über den Wasserstandsensor kann auch das Aquastoppventil gesteuert werden.

Bei einer vorteilhaften Weiterbildung der erfindungsgemäßen Lösung ist der Wassertank fest mit dem Auffangtank verbunden, insbesondere sogar zusammen mit diesem als einstückiges Kunststoffspritzgussteil, ausgebildet. Hierdurch kann eine kostengünstige Herstellung gewährleistet werden, wobei zugleich auch ein Montageaufwand reduziert werden kann, da eine Montage des Wassertanks im Auffangtank entfällt. Alternativ hierzu ist auch vorstellbar, dass der Wassertank aus dem Auffangtank entnehmbar ausgebildet ist, was den großen Vorteil einer vereinfachten Reinigung bietet.

Bei einer weiteren vorteilhaften Ausführungsform der erfindungsgemäßen Lösung sind an dem Auffangtank ein Handgriff und ein Auslass zum Ausschütten von in dem Auffangtank vorhandenem Wasser vorgesehen. Über den Handgriff kann der Auffangtank und zusammen mit diesem auch der Wassertank aus beispielsweise dem Getränkeautomaten entnommen werden. Über einen derartigen Handgriff ist somit ein vergleichsweise einfaches Handling des Auffangtanks und des darin angeordneten Wassertanks möglich.

Die vorliegende Erfindung beruht weiter auf dem allgemeinen Gedanken, einen Getränkeautomaten, insbesondere einen Kaffeevollautomaten, mit einer solchen Wassertankeinrichtung auszustatten, wobei der Getränkeautomat zugleich eine Anschlussstelle zum Anschließen an eine Auslassleitung des Wassertanks der Wassertankeinrichtung besitzt. Hierdurch ist es möglich, eine vergleichsweise hohe Sicherheit gegenüber aus dem Wassertank über den Überlauf austretendem Wasser zu gewährleisten, da mittels des einfachen Schwimmerschalters dann das Aquastoppventil stromlos geschaltet und geschlossen wird. In einem besonders günstigen Fall ist dabei die Anschlussstelle am Getränkeautomaten so ausgeformt, dass durch ein Einsetzen der Wassertankeinrichtung in den Getränkeautomaten zugleich auch eine Fluidverbindung zum Wassertank geschaffen wird. In gleicher Weise kann auch eine Fluidverbindung zum Festwasseranschluss über den Einlauf hergestellt werden.

Bei einer vorteilhaften Weiterbildung des erfindungsgemäßen Getränkeautomaten ist an diesem eine zweite elektrische Schnittstelle zum elektrischen Kontaktieren des Getränkeautomaten mit der ersten elektrischen Schnittstelle an der Wassertankeinrichtung vorgesehen. Über die erste elektrische Schnittstelle am Auffangtank der Wassertankeinrichtung sind insbesondere der Schwimmerschalter, das Aquastoppventil und der Wasserstandsensor elektrisch kontaktierbar. Die erste und zweite elektrische Schnittstelle sind dabei vorzugsweise derart ausgebildet, dass bei einem Einsetzen der Wassertankeinrichtung, das heißt des Auffangtanks der Wassertankeinrichtung in dem Getränkeautomaten zugleich auch eine elektrische Kontaktierung über die erste und zweite elektrische Schnittstelle erfolgt. Die erste und zweite elektrische Schnittstelle können dabei beispielsweise als Stecker und Kupplung ausgebildet sein.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

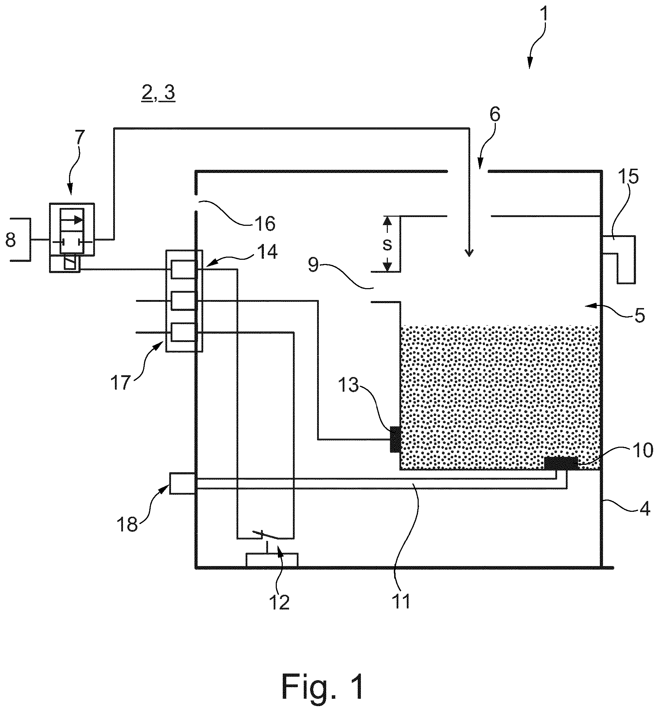

Die einzige Figur 1 zeigt eine Schnittdarstellung durch eine erfindungsgemäße Wassertankeinrichtung und einen erfindungsgemäßen Getränkeautomaten.

Entsprechend der Figur 1, weist eine erfindungsgemäße Wassertankeinrichtung 1 für einen nicht näher gezeichneten Getränkeautomaten 2, beispielsweise einen Kaffeevollautomaten 3, einen Auffangtank 4 auf, in welchem ein Wassertank 5 angeordnet ist. Der Wassertank 5 ist dabei über einen Einlauf 6 und ein elektrisch betätigbares Aquastoppventil 7 an einen Festwasseranschluss 8 anschließbar. Der Wassertank 5 besitzt darüber hinaus einen Überlauf 9, der vom Wassertank 5 in den Auffangtank 4 führt. Das Aquastoppventil 7 ist in bestromtem Zustand geöffnet und in stromlosem Zustand geschlossen. Darüber hinaus besitzt der Wassertank 5 ein Auslassventil 10, über welches Wasser aus dem Wassertank 5 in eine Auslassleitung 11 ablassbar ist. In dem Auffangtank 4 ist darüber hinaus ein Schwimmerschalter 12 angeordnet, der derart ausgebildet ist, dass er ab einem vordefinierten Wasserstand im Auffangtank 4 öffnet und dadurch eine Stromzufuhr zum Aquastoppventil 7 unterbricht und dieses dadurch schließt. Läuft somit Wasser aus dem Wassertank 5 über den Überlauf 9 in den Auffangtank 4 über und erreicht dort einen vordefinierten Pegel, so öffnet der Schwimmerschalter 12 und unterbricht die Stromzufuhr zum Aquastoppventil 7, woraufhin dieses schließt. Dies bietet den großen Vorteil, dass die Wassertankeinrichtung 1 bzw. ein mit dieser ausgestatteter Getränkeautomat 2 bzw. Kaffeevollautomat 3 keine zusätzliche Sicherheitssoftware benötigt, wodurch eine vergleichsweise einfache mechanisch elektrische Sicherheitsvorrichtung geschaffen werden kann, welche einen Wasserüberlauf detektiert und dann entsprechende Gegenmaßnahmen, wie das Schließen des Aquastoppventils 7, ergreift.

Betrachtet man die Figur 1 weiter, so kann man erkennen, dass der Einlauf 6 oberhalb des Überlaufs 9 angeordnet ist, insbesondere um eine Fallstrecke s höher. Hierdurch kann gewährleistet werden, dass oberhalb des Überlaufs 9 stets ein Luftpolster verbleibt, auch im Betriebszustand, wodurch bei einem unter Umständen auftretenden Fehlverhalten und einem unter Umständen auftretenden Unterdruck kein Wasser in Richtung des Festwasseranschlusses 8 durch den Einlauf 6 angesaugt wird.

Im Wassertank 5 bzw. an einer Außenwand desselben kann zudem ein Wasserstandsensor 13 zur kontinuierlichen Überwachung und Erfassung des Wasserstandes im Wassertank 5 angeordnet sein. Der Wasserstandsensor 13 kann dabei beispielsweise als sogenannter Reed-Sensor ausgebildet sein. Der Reed-Sensor bzw. Reed-Schalter ist dabei über eine erste elektrische Schnittstelle 14, welche am Auffangtank 4 angeordnet ist, elektrisch verbunden.

Je nach Ausführungsform kann vorgesehen sein, dass der Wassertank 5 fest mit dem Auffangtank 4 verbunden, insbesondere zusammen mit diesem als einstückiges Kunststoffspritzgussteil, ausgebildet ist. Hierdurch lässt sich eine fertigungsoptimierte und kostengünstige Herstellung des Auffangtanks 4 und des Wassertanks 5 ermöglichen. Alternativ hierzu kann bei einer anderen Ausführungsform auch vorgesehen sein, dass der Wassertank 5 lösbar im Auffangtank 4 angeordnet und dadurch aus diesem entnehmbar ist. Hierdurch ist beispielsweise eine verbesserte Reinigungsmöglichkeit gegeben.

Am Auffangtank 4 können darüber hinaus ein Handgriff 15 und ein Auslass 16 zum Ausschütten von in dem Auffangtank 4 vorhandenem Wasser vorgesehen sein. Über den Griff 15 kann die Wassertankeinrichtung 1 und insbesondere der Auffangtank 4 und damit auch der darin angeordnete Wassertank 5 einfach aus dem Getränkeautomaten 2 entnommen und wieder in diesen eingesetzt werden. Sollte es zu einem Überlaufen von Wasser aus dem Wassertank 5 in den Auffangtank 4 und danach zu einem Schließen des Aquastoppventils 7 kommen, so kann das den Schwimmerschalter 12 öffnende Wasser über den Auslass 16 vergleichsweise einfach bei aus dem Getränkeautomaten 2 entnommener Wassertankeinrichtung 1 ausgeschüttet werden.

Betrachtet man die Figur 1 weiter, so kann man erkennen, dass am Auffangtank 4 eine erste elektrische Schnittstelle 14 vorgesehen ist, über welche der Schwimmerschalter 12, das Aquastoppventil 7 und der Wasserstandsensor 13 elektrisch kontaktierbar sind. Der Getränkeautomat 2 besitzt dabei üblicherweise eine zweite elektrische Schnittstelle 17 zum elektrischen Kontaktieren mit der ersten elektrischen Schnittstelle 14 der Wassertankeinrichtung 1. Die beiden elektrischen Schnittstellen 14, 17 sind dabei vorzugsweise derart ausgebildet, dass ein einfaches Ineinanderstecken und damit Kontaktieren möglich ist. Ebenfalls an dem Getränkeautomaten 2 bzw. dem Kaffeevollautomaten 3 vorgesehen ist eine Anschlussstelle 18, über welche die Auslassleitung 11 der Wassertankeinrichtung 1, beispielsweise ebenfalls durch eine einfache Steckeinrichtung, fluidübertragend und zugleich dicht mit dem Getränkeautomaten 2 verbunden werden kann.

Rein theoretisch kann selbstverständlich das Aquastoppventil 7 auch im Auffangtank 4 integriert sein. Der Auslass 16 kann darüber hinaus mit einer Wasserablassschraube (nicht gezeigt) versehen sein.

Mit der erfindungsgemäßen Wassertankeinrichtung 1 und dem erfindungsgemäßen Getränkeautomaten 2 ist es insbesondere möglich, eine Sicherheitseinrichtung bezüglich eines Wasseraustritts bzw. Wasserüberlaufs vom Wassertank 5 in den Auffangtank 4 ohne zusätzliche Sicherheitssoftware zu schaffen. Hierdurch können insbesondere Softwarefehler ausgeschlossen werden. Ist beispielsweise die erfindungsgemäße Wassertankeinrichtung 1 nicht richtig in den Getränkeautomaten 2 eingesetzt, so kann auch ein Auslaufen von Wasser in den Getränkeautomaten 2 verhindert werden, da bei einem entsprechenden Überlaufen des Wassertanks 5 der Schwimmerschalter 12 öffnet und dadurch das Aquastoppventil 7 schließt. Darüber hinaus können mit der erfindungsgemäßen Wassertankeinrichtung 1 Fehlschaltungen von bislang zur Wasserstanderfassung eingesetzten Reed- bzw. kapazitiven Sensoren ausgeschlossen werden.

### Bezugszeichenliste

- 1: Wassertankeinrichtung
- 2: Getränkeautomat
- 3: Kaffeevollautomat
- 4: Auffangtank
- 5: Wassertank
- 6: Einlauf
- 7: Aquastoppventil
- 8: Festwasseranschluss
- 9: Überlauf
- 10: Auslassventil
- 11: Auslassleitung
- 12: Schwimmerschalter
- 13: Wasserstandsensor
- 14: erste elektrische Schnittstelle
- 15: Handgriff
- 16: Auslass
- 17: zweite elektrische Schnittstelle
- 18: Anschlussstelle

## Patentansprüche

1. Wassertankeinrichtung (1) für einen Getränkeautomaten (2), insbesondere für einen Kaffeevollautomaten (3), mit einem Auffangtank (4) und einem Wassertank (5), wobei der Wassertank (5) über einen Einlauf (6) und ein elektrisch betätigbares Aquastoppventil (7) an einen Festwasseranschluss (8) anschließbar ist und einen Überlauf (9) aufweist, der vom Wassertank (5) in den Auffangtank (4) führt, wobei das Aquastoppventil (7) in bestromtem Zustand geöffnet und in stromlosem Zustand geschlossen ist, ein Auslassventil (10), über welches Wasser aus dem Wassertank (5) abgelassen werden kann, und wobei ein im Auffangtank (4) angeordneter Schwimmerschalter (12) derart ausgebildet ist, dass er ab einem vordefinierten Wasserstand im Auffangtank (4) öffnet und eine Stromzufuhr zum Aquastoppventil (7) unterbricht und dieses dadurch schließt, **dadurch gekennzeichnet, dass** der Wassertank (5) in dem Auffangtank (4) angeordnet ist.

2. Wassertankeinrichtung nach Anspruch 1, **dadurch gekennzeichnet, dass** der Einlauf (6) oberhalb des Überlaufs (9), insbesondere um eine Fallstrecke s höher als der Überlauf (9) am Wassertank (5) angeordnet ist, und/oder dass das Aquastopp-Ventil (7) Bestandteil der Wassertankeinrichtung (1) ist, insbesondere innerhalb des Auffangtanks (4) angeordnet ist.

3. Wassertankeinrichtung nach Anspruch 1 oder 2, **dadurch gekennzeichnet, dass** ein Wasserstandsensor (13) zur Erfassung eines Wasserstandes in dem Wassertank (5) vorgesehen ist.

4. Wassertankeinrichtung nach Anspruch 3, **dadurch gekennzeichnet, dass** der Wasserstandsensor (13) als Reed-Sensor ausgebildet ist.

5. Wassertankeinrichtung nach einem der Ansprüche 1 bis 4, **dadurch gekennzeichnet, dass** der Wassertank (5) fest mit dem Auffangtank (4) verbunden, insbesondere zusammen mit diesem als einstückiges Kunststoffspritzgussteil ausgebildet, ist.

6. Wassertankeinrichtung nach einem der Ansprüche 1 bis 4, **dadurch gekennzeichnet, dass** der Wassertank (5) aus dem Auffangtank (4) entnehmbar ausgebildet ist.

7. Wassertankeinrichtung nach einem der vorhergehenden Ansprüche, **dadurch gekennzeichnet, dass** am Auffangtank (4) ein Handgriff (15) und ein Auslass (16) zum Ausschütten von in dem Auffangtank (4) vorhandenem Wasser vorgesehen sind.

8. Wassertankeinrichtung nach einem der vorhergehenden Ansprüche, **dadurch gekennzeichnet, dass** eine erste elektrische Schnittstelle (14) am Auffangtank (4) vorgesehen ist, über welche der Schwimmerschalter (12), das Aquastoppventil (7) und der Wasserstandsensor (13) elektrisch kontaktierbar sind.

9. Getränkeautomat (2), insbesondere ein Kaffeevollautomat (3), mit einer Wassertankeinrichtung (1) nach einem der vorhergehenden Ansprüche, und mit einer Anschlussstelle (18) zum Anschließen an eine Auslassleitung (11) des Wassertanks (5).

10. Getränkeautomat nach Anspruch 9, mit einer Wassertankeinrichtung (1) nach Anspruch 8, **dadurch gekennzeichnet, dass** an dem Getränkeautomat (2) eine zweite elektrische Schnittstelle (17) zum elektrischen Kontaktieren des Getränkeautomaten (2) mit der ersten elektrischen Schnittstelle (14) an der Wassertankeinrichtung (1) vorgesehen ist.

## Claims

1. Water tank facility (1) for a drinks machine (2), in particular for a fully automatic coffee machine (3), with a collection tank (4) and a water tank (5), wherein the water tank (5) can be connected to a fixed water connection (8) via an inlet (6) and an AquaStop valve (7) which can be actuated electrically, and said water tank having an overflow (9), which runs from the water tank (5) into the collection tank (4), wherein the AquaStop valve (7) is open in the powered state and is closed in the unpowered state, an outlet valve (10), via which water can be drained from the water tank (5), and wherein a float switch (12) arranged in the collection tank (4) is designed such that it opens from a predefined water level in the collection tank (4) and interrupts a power supply to the AquaStop valve (7), thereby closing it, **characterised in that** the water tank (5) is arranged in the collection tank (4).

2. Water tank facility according to claim 1, **characterised in that** the inlet (6) is arranged above the overflow (9), in particular by a gradient section s higher than the overflow (9), on the water tank (5), and/or the AquaStop valve (7) is a component of the water tank facility (1), in particular is arranged within the collection tank (4).

3. Water tank facility according to claim 1 or 2, **characterised in that** a water level sensor (13) is provided to detect a water level in the water tank (5).

4. Water tank facility according to claim 3, **characterised in that** the water level sensor (13) is designed as a reed sensor.

5. Water tank facility according to one of claims 1 to 4, **characterised in that** the water tank (5) is fixedly connected to the collection tank (4), in particular is designed together with the collection tank as a single-part plastic injection moulded part.

6. Water tank facility according to one of claims 1 to 4, **characterised in that** the water tank (5) is designed such that it can be removed from the collection tank (4).

7. Water tank facility according to one of the preceding claims, **characterised in that** a handle (15) and an outlet (16) are provided on the collection tank (4) for pouring out water present in the collection tank (4).

8. Water tank facility according to one of the preceding claims, **characterised in that** a first electrical interface (14) is provided on the collection tank (4), via which the float switch (12), the AquaStop valve (7) and the water level sensor (13) can be brought into electrical contact.

9. Drinks machine (2), in particular a fully automatic coffee machine (3), with a water tank facility (1) according to one of the preceding claims, and with a connection point (18) for connection to an outlet line (11) of the water tank (5).

10. Drinks machine according to claim 9, with a water tank facility (1) according to claim 8, **characterised in that** a second electrical interface (17) is provided on the drinks machine (2) for electrically contacting the drinks machine (2) with the first electrical interface (14) to the water tank facility (1).

## Revendications

1. Dispositif de réservoir d'eau (1) pour un distributeur automatique de boissons (2), en particulier pour une machine à café entièrement automatique (3), comprenant un réservoir collecteur (4) et un réservoir d'eau (5), dans lequel le réservoir d'eau (5) peut être connecté à un raccordement d'eau fixe (8) par une arrivée (6) et une vanne aquastop actionnable électriquement (7) et comprend un trop-plein (9), qui conduit du réservoir d'eau (5) au réservoir collecteur (4),
dans lequel la vanne aquastop (7) est ouverte dans un état sous tension et fermée dans un état hors tension, et
une soupape de sortie (10), par laquelle de l'eau peut être évacuée du réservoir d'eau (5), et
dans lequel un interrupteur à flotteur (12) disposé dans le réservoir collecteur (4) est configuré de telle manière qu'il s'ouvre à partir d'un niveau d'eau prédéfini dans le réservoir collecteur (4) et coupe l'alimentation en courant de la vanne aquastop (7) et que celle-ci se ferme par conséquent,
**caractérisé en ce que** le réservoir d'eau (5) est disposé dans le réservoir collecteur (4).

2. Dispositif de réservoir d'eau selon la revendication 1, **caractérisé en ce que** l'arrivée (6) est disposée au-dessus du trop-plein (9), en particulier autour d'un trajet de chute s plus haut que le trop-plein (9) sur le réservoir d'eau (5), et/ou **en ce que** la vanne aquastop (7) est une composante du dispositif de réservoir d'eau (1), en particulier est disposée à l'intérieur du réservoir d'eau (4).

3. Dispositif de réservoir d'eau selon la revendication 1 ou 2, **caractérisé en ce qu'**un capteur de niveau d'eau (13) est prévu pour détecter un niveau d'eau dans le réservoir d'eau (5).

4. Dispositif de réservoir d'eau selon la revendication 3, **caractérisé en ce que** le capteur de niveau d'eau (13) est configuré sous forme d'un capteur Reed.

5. Dispositif de réservoir d'eau selon l'une des revendications 1 à 4, **caractérisé en ce que** le réservoir d'eau (5) est assemblé de façon fixe au réservoir collecteur (4), en particulier est formé ensemble avec celui-ci sous forme d'une pièce monobloc moulée par injection de matière plastique.

6. Dispositif de réservoir d'eau selon l'une des revendications 1 à 4, **caractérisé en ce que** le réservoir d'eau (5) est configuré de façon à pouvoir être retiré du réservoir collecteur (4).

7. Dispositif de réservoir d'eau selon l'une des revendications précédentes, **caractérisé en ce qu'**une poignée (15) et une sortie (16) pour déverser l'eau présente dans le réservoir collecteur (4) sont agencées sur le réservoir collecteur (4).

8. Dispositif de réservoir d'eau selon l'une des revendications précédentes, **caractérisé en ce qu'**une première interface électrique (14) est prévue sur le réservoir collecteur (4), par laquelle l'interrupteur à flotteur (12), la vanne aquastop (7) et le capteur de niveau d'eau (13) peuvent être mis en contact électriquement.

9. Distributeur automatique de boissons (2), en particulier machine à café entièrement automatique (3), comprenant un dispositif de réservoir d'eau (1) selon l'une des revendications précédentes, et un point de raccordement (18) à raccorder à un conduit d'évacuation (11) du réservoir d'eau (5).

10. Distributeur automatique de boissons selon la revendication 9, comprenant un dispositif de réservoir d'eau (1) selon la revendication 8, **caractérisé en ce qu'**une deuxième interface électrique (17) destinée à mettre en contact électrique le distributeur automatique de boissons (2) avec la première interface électrique (14) sur le dispositif de réservoir d'eau (1) est prévue sur le distributeur automatique de boissons.
